# EUROPEAN PATENT APPLICATION

(11) **EP 4 797 225 A1**
(43) Date of publication of application: **26.08.2026**
(21) Application number: 25178968.1
(22) Date of filing: 27.05.2025
(51) Int. Cl.: G06V 20/58, B60W 30/09, B60W 30/095

(54) **VEHICLE AND CONTROL METHOD THEREOF**

(30) Priority: 20.02.2025 KR 20250022017
(71) Applicant: Doosan Bobcat Korea Co., Ltd., Incheon 22503 (KR)
(72) Inventor: WOO, Sangha, 22503 Incheon (KR)
(74) Representative: Studio Torta S.p.A.

(57) **Abstract**

A vehicle (100) includes: cameras (110); a distance sensor (130); a steering angle sensor (120); and an output device (150); and a controller (180) is configured to generate a guideline indicating an expected movement direction of the vehicle (100) based on a steering angle of the vehicle (100) obtained through the steering angle sensor (120), identify, based on image data obtained through the cameras (110) and the guideline, a person existing on a path along which the vehicle (100) moves, control, based on the identifying of the person existing on the path along which the vehicle (100) moves, the output device (150) to output a notification, and control a braking device (179) to brake or decelerate the vehicle (100).

## Description

### CROSS-REFERENCE TO RELATED APPLICATION(S)

This application is based on and claims priority under 35 U.S.C. §119 to Korean Patent Application No. 10-2025-0022017, filed on February 20, 2025, in the Korean Intellectual Property Office, the disclosure of which is incorporated by reference herein in its entirety.

### BACKGROUND

### 1. Field

The disclosure relates to a vehicle capable of performing a warning or control through pedestrian detection and a control method thereof.

### 2. Description of the Related Art

Industrial vehicles such as forklifts are used to perform work in various industrial sites such as logistics warehouses and factories and especially used to lift and transport heavy objects. The industrial vehicles have the operation characteristic of repeatedly moving forward and/or backward, and therefore, ensuring safety is essential.

The industrial vehicles turn quickly when reversing to minimize the turning radius in a narrow space, but drivers who operate the industrial vehicles have difficulties in securing visibility. Therefore, there has been a risk of fatal accidents when drivers are not paying attention. Conventionally, various types of sensors, such as ultrasonic sensors, cameras, and/or radars, have been applied to industrial vehicles to assist the drivers' driving, and the sensors are also applied to general vehicles.

For example, vehicles are equipped with rear cameras, and technology of, when a vehicle displays, on a display, an image corresponding to image data obtained through a rear camera, displaying a guideline together on the display for a driver to refer to only the guideline according to a steering angle of the vehicle has been developed. However, the technology has the disadvantage of requiring the driver to recognize safety-related matters and respond to them.

Also, a conventional industrial vehicle including multiple cameras detects and warns pedestrians in all regions around the vehicle through image data obtained by the multiple cameras regardless of its actual driving path, which increases a driver's fatigue and decreases vehicle productivity.

### SUMMARY

It is an aspect of the disclosure to provide a vehicle to which a new technology capable of focusing a driver's attention and ensuring safety of pedestrians more efficiently and productively compared to conventional technologies is applied, and a method of controlling the vehicle.

For example, a vehicle and a control method thereof may provide a novel technology for providing a warning notification and/or decelerating or braking the vehicle only when a person is present in an actual driving direction and region of the vehicle.

Additional aspects of the disclosure will be set forth in part in the description which follows and, in part, will be obvious from the description, or may be learned by practice of the disclosure.

A vehicle according to an aspect of the disclosure may include: a plurality of cameras provided on a main body of the vehicle and having an outward viewing field; a distance sensor configured to detect a distance to an object; a steering angle sensor configured to obtain a steering angle of the vehicle; and an output device configured to output at least one of visual information or auditory information; and a controller electrically connected to the plurality of cameras, the distance sensor, the steering angle sensor, and the output device, wherein the controller may be configured to generate a guideline indicating an expected movement direction of the vehicle based on the steering angle of the vehicle obtained through the steering angle sensor, identify a person existing on a path along which the vehicle moves, based on image data obtained through the plurality of cameras and the guideline, and control the output device to output a notification based on identifying the person existing on the path along which the vehicle moves.

The vehicle may further include a velocity sensor configured to detect a velocity of the vehicle, and the controller may be configured to generate the guideline based on the velocity of the vehicle detected through the speed sensor.

The controller may be configured to generate the guideline based on the velocity of the vehicle and guideline length information for pre-designated vehicle velocity information.

The controller may be configured to generate the guideline with a longer length from the vehicle at a higher velocity of the vehicle.

The controller may be configured to identify the person around the vehicle based on the image data, identify whether the person is located in a region of the guideline in response to the identifying of the person, and control the output device to output the notification according to the person being located in the region of the guideline.

The controller may be configured to, according to the person being located in the region of the guideline, control a braking device of the vehicle to control at least one of braking the vehicle or decelerating the vehicle.

The controller may be configured to, further based on identifying of straight driving or turning of the vehicle, control the output device to output the notification and control the braking device to control at least one of braking the vehicle or decelerating the vehicle.

The controller may be configured to divide the region of the guideline into a pre-designated number of regions according to distances from the vehicle, and, when the person is located in any region of the pre-designated number of regions divided from the region of the guideline, based on pre-designated reference control information for each of the regions divided according to the distances from the vehicle, control the output device to output the notification and control the braking device of the vehicle to control at least one of braking the vehicle or decelerating the vehicle.

The pre-designated reference control information for each of the regions divided according to the distances from the vehicle may include output interval information of the notification and control velocity information of the vehicle.

The vehicle may further include memory storing an artificial intelligence (AI) model trained in advance to recognize an object, and the controller may be configured to input the image data as input data of the Al model trained in advance and obtain information indicating that the person has been identified, as output data of the Al model trained in advance.

The output device may include a display, and the controller may be configured to control the display to display an image corresponding to the image data and the guideline.

A control method of a vehicle according to an aspect of the disclosure may include: obtaining image data through a plurality of cameras provided on a main body of the vehicle and having a viewing angle facing outside of the vehicle; generating a guideline indicating an expected movement direction of the vehicle based on a steering angle of the vehicle obtained through a steering angle sensor of the vehicle; identifying a person existing on a path along which the vehicle moves, based on the image data and the guideline; and controlling an output device of the vehicle to output a notification based on identifying the person existing on the path along which the vehicle moves.

The generating of the guideline may be further based on a velocity of the vehicle detected through a velocity sensor configured to detect a velocity of the vehicle.

The generating of the guideline may be based on the velocity of the vehicle and guideline length information for pre-designated vehicle velocity information.

The guideline may be generated with a longer length from the vehicle at a higher velocity of the vehicle.

The control method may further include identifying the person around the vehicle based on the image data, and identifying whether the person is located in a region of the guideline in response to the identifying of the person, wherein the controlling of the output device to output the notification may be based on the person being located in the region of the guideline.

The control method may further include, according to the person being located in the region of the guideline, controlling a braking device of the vehicle to control at least one of braking the vehicle or decelerating the vehicle.

The controlling of the output device to output the notification and the controlling of the braking device to control at least one of braking the vehicle or decelerating the vehicle may be further based on identifying of straight driving or turning of the vehicle.

The region of the guideline may be divided into a pre-designated number of regions according to distances from the vehicle, and the control method may further include, when the person is located in any region of the pre-designated number of regions divided from the region of the guideline, based on pre-designated reference control information for each of the regions divided according to the distances from the vehicle, controlling the output device to output the notification and controlling the braking device of the vehicle to control at least one of braking the vehicle or decelerating the vehicle.

The pre-designated reference control information for each of the regions divided according to the distances from the vehicle may include output interval information of the notification and control velocity information of the vehicle.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a block diagram showing a configuration of a vehicle according to an embodiment;
FIGS. 2A and 2B are a view for describing a guideline that automatically changes based on a velocity of a vehicle according to an embodiment;
FIG. 3 shows divided regions in a region of a guideline in a vehicle according to an embodiment;
FIG. 4 is a flowchart illustrating an operation of a vehicle according to an embodiment;
FIG. 5A and 5B are a view for describing an operation of a vehicle according to an embodiment when the vehicle travels straightly;
FIGS. 6A to 6D are a view for describing an operation of a vehicle according to an embodiment when the vehicle turns to left or right; and
FIG. 7 shows an example in which a person exists on a driving path of a vehicle according to an embodiment while the vehicle travels.

### DETAILED DESCRIPTION

Like reference numerals refer to like components throughout the specification. This specification does not describe all the components of the embodiments, and duplicative contents between embodiments or general contents in the technical field of the present disclosure will be omitted. The terms 'part,' 'module,' 'member,' and 'block' used in this specification may be embodied as software or hardware, and it is also possible for a plurality of 'parts,' 'modules,' 'members,' and 'blocks' to be embodied as one component, or one 'part,' 'module,' 'member,' and 'block' to include a plurality of components according to embodiments.

Throughout the specification, when a part is referred to as being 'connected' to another part, it includes not only a direct connection but also an indirect connection, and the indirect connection includes connecting through a wireless network.

Also, when it is described that a part 'includes' a component, it means that the part may further include other components, not excluding the other components unless specifically stated otherwise.

Throughout the specification, when a member is described as being 'on' another member, this includes not only a case in which the member is in contact with the other member but also a case in which another member is present between the two members.

The terms first, second, etc. are used to distinguish one component from another component, and the components are not limited by the above-mentioned terms.

The singular forms 'a,' 'an,' and 'the' include plural referents unless the context clearly dictates otherwise.

In each operation, an identification numeral is used for convenience of explanation, the identification numeral does not describe the order of the operations, and each operation may be performed differently from the order specified unless the context clearly states a particular order.

A driver assistance function of a conventional vehicle displays only a guideline indicating an expected movement direction of a vehicle on a display and has a disadvantage of putting responsibility for actual safety matters on a driver. Also, in the case of an industrial vehicle, a camera detects and warns a person in all regions around the vehicle regardless of an actual movement path of the vehicle, which may raise a driver's fatigue and distract the driver's attention, resulting in a reduction of work productivity.

An embodiment of the disclosure may provide improved pedestrian detection and warning and control functions based on pedestrian detection by complementing the driver assistance function of the conventional vehicle described above.

For example, an embodiment of the disclosure may provide a technology of generating a guideline indicating an expected movement direction of a vehicle based on a steering angle of the vehicle and/or a velocity of the vehicle, and outputting, when a person exists in a region of the guideline, a visual and auditory notification for warning and decelerating or braking the vehicle.

Hereinafter, the operation principle and embodiments of the disclosure will be described with reference to the accompanying drawings.

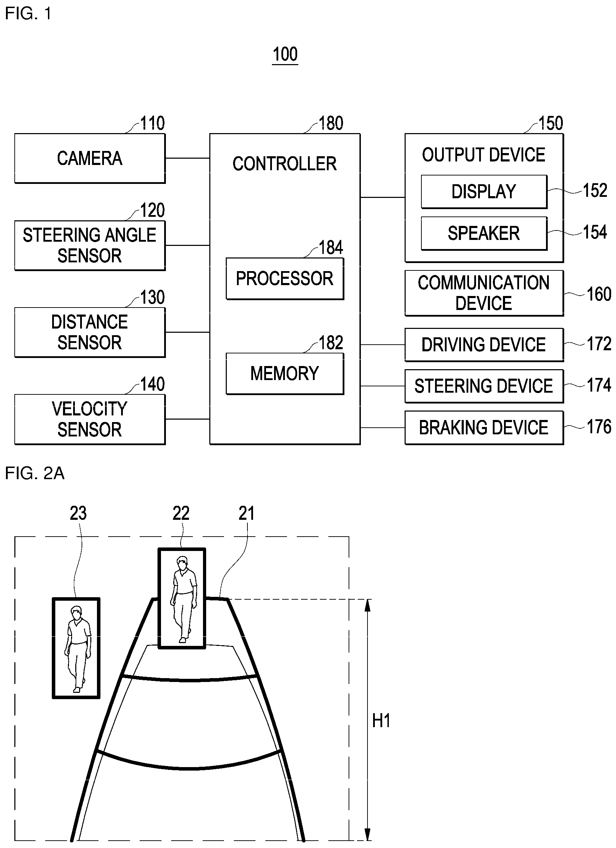

FIG. 1 is a block diagram showing a configuration of a vehicle according to an embodiment.

Referring to FIG. 1, a vehicle 100 may include a camera 110, a steering angle sensor 120, a distance sensor 130, a velocity sensor 140, an output device 150, a communication device 160, a driving device 172, a steering device 174, a braking device 179, and/or a controller 180.

The camera 110 may obtain image data about surroundings of the vehicle 100.

The camera 110 may include a plurality of lenses (not shown), an image sensor (not shown), and/or an image processor (not shown).

One or a plurality of cameras 110 may be provided, and the camera 110 may be positioned on a main body of the vehicle 100 to have a viewing field facing the surroundings of the vehicle 100.

The steering angle sensor 120 may obtain a steering angle of the vehicle 100. The steering angle sensor 120 may be a sensor to which a sensor technology based on a conventional hall method or an inductive method is applied.

The distance sensor 130 may measure a distance to an object, and one or a plurality of distance sensors 130 may be provided. The distance sensor 130 may include one or more of various existing sensors capable of measuring distances. For example, the distance sensor 130 may include a camera and/or an environment recognition sensor such as a lidar.

The velocity sensor 140 may obtain a velocity, that is, a driving velocity of the vehicle 100.

The output device 150 may output visual information and/or auditory information to inform a driver as a passenger in the vehicle 100 and/or a person located around the vehicle 100 of the information.

The output device 150 may include a display 152 that outputs visual information and/or a speaker 154 that outputs auditory information.

The communication device 160 may include a communication circuit that establishes a communication channel with an external device, for example, a server and supports communication through the established communication channel, and/or a control circuit that controls operations of the communication circuit. For example, the communication device 160 may include a wireless communication module (e.g., a cellular communication module, a Wireless-Fidelity (Wi-Fi) communication module, a short-range wireless communication module (e.g., a Bluetooth communication module), or a global navigation satellite system (GNSS) communication module), and communicate with an external device through a corresponding communication module among the communication modules.

The communication unit 160 may include a communication circuit that enables communication between components (or devices) of the vehicle 100 through a vehicle communication network and/or a control circuit that controls operations of the communication circuit. For example, the components included in the vehicle 100 may exchange data via Ethernet, Media Oriented Systems Transport (MOST), Flexray, Controller Region Network (CAN), or Local Interconnect Network (LIN).

The driving device 172 may provide power for driving the vehicle 100 and may drive or accelerate the vehicle 100 in response to a driver's acceleration intention, for example, through an accelerator pedal (not shown). The driving device 172 may include, for example, an engine, a transmission, and/or a motor.

The steering device 174 may change a driving direction of the vehicle 100, and, for example, the steering device 174 may change a driving direction of the vehicle 100 in response to the driver's steering intention through a steering wheel.

The braking device 176 may provide a braking force for braking the vehicle 100, and, for example, the braking device 176 may decelerate or stop the vehicle 100 in response to the driver's braking intention through a brake pedal.

The controller 180 may control overall operations of the vehicle 100. The controller 180 may be called by various names, such as, for example, electronic control unit (ECU) or vehicle control unit (VCU).

The controller 180 may be electrically and/or communicatively connected to the components of the vehicle 100, for example, the camera 110, the steering angle sensor 120, the distance sensor 130, the velocity sensor 140, the output device 150, the communication device 160, the driving device 172, the steering device 174, and/or the braking device 176, and transmit control signals and/or control data to the components.

For example, the controller 180 may obtain image data from the camera 110 and sensing signals and/or sensing data from the steering angle sensor 120, the distance sensor 130, and/or the velocity sensor 140, and control the output device 150, the driving device 172, the steering device 174, and/or the braking device 176 based on the image data, the sensing signals, and/or the sensing data.

The controller 180 may identify a person in an image corresponding to image data obtained through the camera 110 through an object recognition technology, and more specifically, the controller 180 may identify a location of the person in the image.

For example, an artificial intelligence (AI) module trained in advance to recognize objects may have been stored in memory 182 which will be described below. Accordingly, the controller 180 may input image data obtained through the camera 110 as input data of the Al model and acquire, as output data of the Al model, information indicating that a person has been identified and information indicating a location of the person in an image corresponding to the obtained image data.

The controller 180 may correct the location of the person in the image, based on recognition on a distance to the person, obtained from the distance sensor 130.

The controller 180 may generate, based on a steering angle of the vehicle 100 obtained from the steering angle sensor 120, a guideline indicating an expected steering direction of the vehicle 100, that is, whether the vehicle travels straightly or turns. The controller 180 may generate a guideline having an angle corresponding to the steering angle of the vehicle 100 obtained from the steering angle sensor 120 with respect to the vehicle 100. For example, the guideline may be a three-dimensional guideline. In this case, additionally, when a gear of the vehicle 100 is in a drive (D) position, the guideline indicating whether the vehicle travels straightly or turns may be generated in a state in which the vehicle 100 is expected to travel forward, and when the gear of the vehicle 100 is in a reverse (R) position, the guideline indicating whether the vehicle travels straightly or turns may be generated in a state in which the vehicle 100 is expected to reverse.

When the gear of the vehicle 100 is in the D position, the controller 180 may control the display 152 to output an image corresponding to image data in a forward direction of the vehicle 100 based on a steering angle of the vehicle 100 and a guideline on the image.

When the gear of the vehicle 100 is in the R position, the controller 180 may control the display 152 to output an image corresponding to image data in a backward direction of the vehicle 100 based on a steering angle of the vehicle 100 and a guideline on the image.

A width of the guideline may have been set in advance to correspond to a width of the vehicle 100 regardless of an operation state of the vehicle 100, and in the case of a length of the guideline, a reference length corresponding to a stop state of the vehicle 100 may have been set in advance.

The controller 180 may change a length of a guideline generated based on the vehicle, according to a velocity of the vehicle 100 obtained through the velocity sensor 140.

For example, the controller 180 may change a length of a guideline generated based on the vehicle 100 according to a velocity of the vehicle 100 from the reference length corresponding to the stop state of the vehicle 100.

For example, a length of a guideline when the vehicle travels at a high velocity may be longer than that when the vehicle travels at a low velocity.

Guideline length information for pre-designated vehicle velocity information may be stored in the memory 182 which will be described below. For example, guideline length information based on the vehicle 100 for vehicle velocity ranges, such as Table 1, may be stored in the memory 182.

**[Table 1]**

| Velocity (V) Ranges of Vehicle 100 | Guideline Length (L) (or H) Information Based on Vehicle 100 |
|---|---|
| 0 ≤ V < V1 | First Length L1 |
| V1 ≤ V < V2 | Second Length L2 (L2 > L1) |
| ... | ... |
| V(N-1) ≤ V < VN (N is an integer) | N-th Length N1 (N1 > N1-1) |

When the controller 180 identifies a person in an image corresponding to image data obtained through the camera 110, the controller 180 may identify whether the corresponding person is located in a region of a generated guideline.

According to the corresponding person being located in the region of the generated guideline, the controller 180 may control the output device 150 to output a visual and/or auditory notification and/or control the brake device 176 to decelerate or brake the vehicle 100.

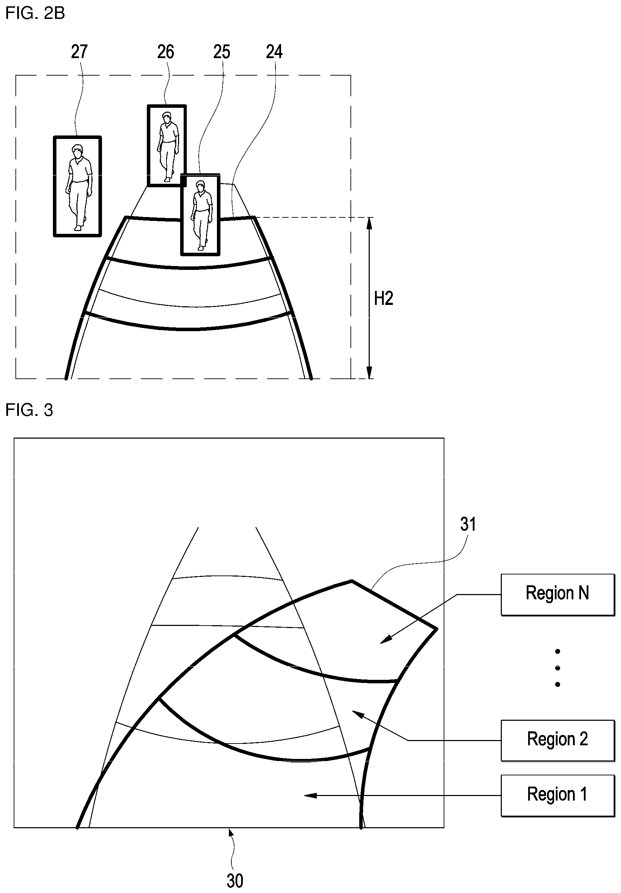

FIGS. 2A and 2B are a view for describing a guideline that automatically changes based on a velocity of the vehicle 100 according to an embodiment.

Referring to FIG. 2A, when the vehicle 100 travels at a pre-designated first reference velocity or higher, that is, when the vehicle 100 travels at a high velocity, the controller 180 may display, on the display 152, an image corresponding to image data obtained through the camera 110 and a guideline 21 having a long length H1 on the image, as shown in FIG. 2A.

Also, referring to FIG. 2B, when the vehicle 100 travels at a pre-designated second reference velocity (the first reference velocity > the second reference velocity) or higher, that is, when the vehicle 100 travels at a low velocity, the controller 180 may display, on the display 152, an image corresponding to image data obtained through the camera 110 and a guideline 24 having a short length H2 on the image, as shown in FIG. 2B.

The reason may be because the controller 180 generates the guideline 21 having a long length based on the guideline length information for pre-designated vehicle velocity information described above to detect a person at a long distance from the vehicle 100 when the vehicle 100 travels at a high velocity, and when the vehicle 100 travels at a low velocity, the controller 180 generates the guideline 21 having a short length to detect a person at a short distance from the vehicle 100.

When the controller 180 generates a guideline, the controller 180 may divide a region of the guideline into a preset number of regions according to distances from the vehicle 100 and generate the divided regions in the region of the guideline.

FIG. 3 shows divided regions in a region of a guideline in the vehicle 100 according to an embodiment.

Referring to FIG. 3, in the case in which the preset number is three, the controller 100 may divide a region of a guideline 31 into a first region Region 1, a second region Region 2, and a third region Region 3 according to distances from a reference point 30 corresponding to a location of the vehicle 100, and generate divided regions.

Pre-designated reference control information corresponding to when a person is located in each of regions divided according to distances from the vehicle 100 may be stored in the memory 182 which will be described below. For example, as shown in the following Table 2, as pre-designated reference control information corresponding to when a person is located in each of divided regions, notification output interval, vehicle velocity control information, and braking control information may be stored in the memory 182.

**[Table 2]**

| Region | Notification Output Interval | Vehicle Velocity Control and Braking Control |
|---|---|---|
| First Region (Closest Region to Vehicle 100) | Continuous | 0 km/h (Braking) |
| Second Region (Region Connected to First Region) | A1 ms | V1 km/h (0 < V1) |
| ... | ... | ... |
| N-th Region (Farthest Region from Vehicle 100. | AN ms (A1 < AN) | VN km/h (V1 < VN) |

Additionally, although not classified in Table 2, intensities of notification (e.g., volumes of sound) for the regions which become weaker from the first region to the N-th region may be designated in advance and stored.

When a person is located in any region of the divided regions of the guideline, the controller 180 may identify pre-designated reference control information matching with the region where the person is located, in the pre-designated reference control information for the regions divided according to distances from the vehicle 100, stored in the memory 182.

The controller 180 may perform notification output control through the output device 150 and deceleration or braking control of the vehicle 100 through the braking device 176 based on the identified pre-designated reference control information.

For example, when the region where the person is located is the first region of Table 2, the controller 180 may cause a notification to be continuously output through the output device 150 and control the braking device 176 such that velocity of the vehicle 100 becomes 0 km/h, that is, the vehicle 100 is braked.

Meanwhile, the controller 180 may include the memory 182 and a processor 184.

The memory 182 may include non-volatile memory, such as a flash memory, Read Only Memory (ROM), Electrically Erasable Programmable Read Only Memory (EEPROM), etc., as well as volatile memory, such as Static Random Access Memory (S-RAM) and Dynamic Random Access Memory (D-RAM).

The memory 182 may store programs and data for processing image data obtained from the camera 110 and a detection signal obtained from each of the steering angle sensor 120, the distance sensor 130, and/or the velocity sensor 140. Also, the memory 182 may store programs and data for generating a control signal and/or control data for each component.

The memory 182 may store an Al model trained in advance to recognize objects. For example, the Al model may include a machine learning model, a deep learning model, a generative model, or a transfer learning model.

The memory 182 may provide the stored programs and data to the processor 184 in response to a request from the processor 184.

The processor 184 may include an image processor for processing image data, a digital signal processor for processing digital data, and/or a micro control unit (MCU) for generating a control signal and/or control data.

The processor 184 may process a detection signal and/or detection data obtained from each sensor, and generate a control signal and/or control data for the output device 150, the driving device 172, the steering device 174, and/or the braking device 176 based on the processed result.

Meanwhile, although it has been described that an Al model trained in advance to recognize objects is stored in the memory 182 in the above-described embodiment, the Al model trained in advance may be stored in a server (not shown) according to another embodiment.

In this case, the vehicle 100 may transmit image data obtained through the communication device 160 to the server, and receive, as output data of the Al model, information indicating that a person has been identified and information indicating a location of the person in an image corresponding to the obtained image data from the server.

Also, the components included in the vehicle 100 in the above-described embodiment may not be essential components of the vehicle 100. That is, some of the components may be omitted or other components may be added.

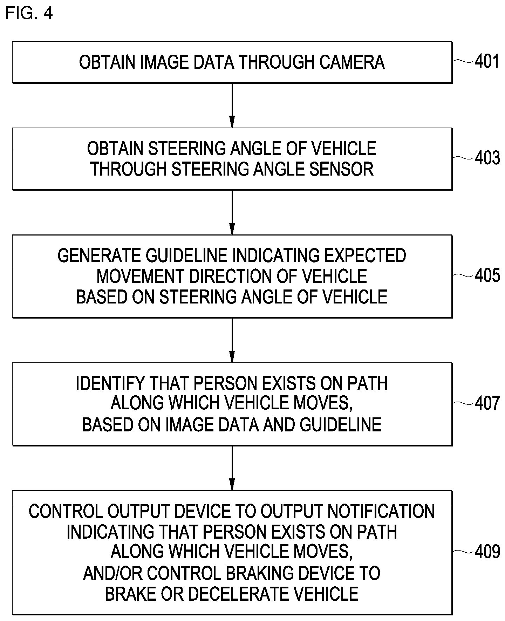

FIG. 4 is a flowchart illustrating an operation of the vehicle 100 (and/or the controller 180) according to an embodiment.

Referring to FIG. 4, the vehicle 100 may obtain image data through the camera 110 (401).

The vehicle 100 may obtain a steering angle of the vehicle 100 through the steering angle sensor 120 (403).

The vehicle 100 may generate a guideline indicating an expected movement direction of the vehicle 100 based on the steering angle of the vehicle 100 (405).

The vehicle 100 may identify that a person exists on a path along which the vehicle 100 moves, based on the image data and the guideline (407).

The vehicle 100 may identify whether a person exists around the vehicle 100 based on the image data, and according to a person existing around the vehicle 100, the vehicle 100 may identify whether the person is located in a region of the guideline. According to the person being located in the region of the guideline, the vehicle 100 may identify that the person exists on a path along which the vehicle 100 moves.

The vehicle 100 may control the output device 150 to output a notification indicating that a person exists on the path along which the vehicle 100 moves, and/or control the braking device 176 to brake or decelerate the vehicle 100 (409).

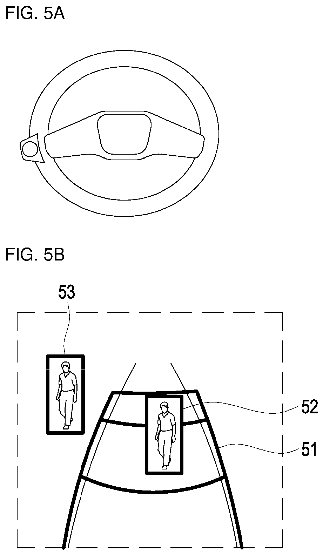

FIGS. 5A and 5B are a view for describing an operation of the vehicle 100 according to an embodiment when the vehicle 100 travels straightly.

When the steering wheel is in a neutral position such that the vehicle 100 travels straightly, as shown in FIG. 5A, the vehicle 100 may display, on the display 152, an image corresponding to image data obtained through the camera 110 and a guideline 51 on the image, as shown in FIG. 5B.

The vehicle 100 may identify a first person 52 existing in a region of the guideline 51 and a second person 53 existing outside the region of the guideline 51.

Based on the identifying of the first person 52 existing in the region of the guideline 51, the vehicle 100 may control the output device 150 to output a notification for warning and/or control the braking device 176 to brake or decelerate the vehicle 100.

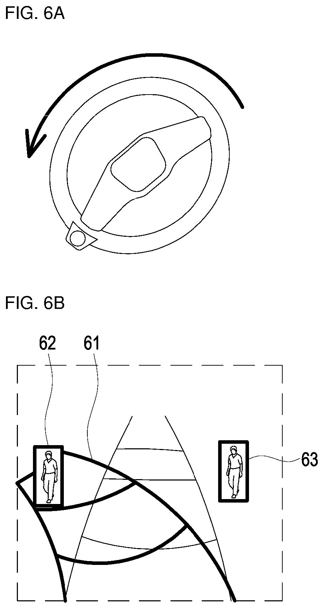

FIGS. 6A to 6D are a view for describing an operation of the vehicle 100 according to an embodiment when the vehicle 100 turns to left or right.

When the steering wheel rotates to turn the vehicle 100 to the right, as shown in FIG. 6A, the vehicle 100 may display, on the display 152, an image corresponding to image data obtained through the camera 110 and a guideline 61 on the image, as shown in FIG. 6B.

The vehicle 100 may identify a first person 62 existing on a region of the guideline 61 and a second person 63 existing outside the region of the guideline 61.

Based on the identifying of the first person 62 existing in the region of the guideline 61, the vehicle 100 may control the output device 150 to output a notification for warning and/or control the braking device 176 to brake or decelerate the vehicle 100.

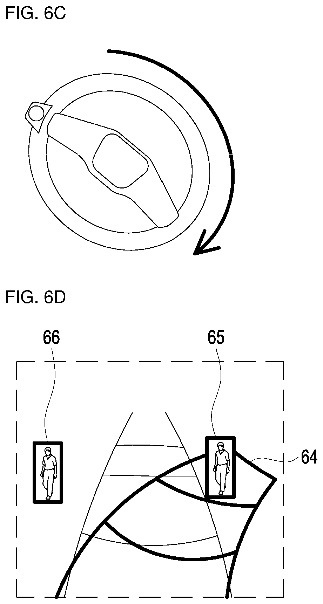

When the steering wheel rotates to turn the vehicle 100 to the left, as shown in FIG. 6C, the vehicle 100 may display, on the display 152, an image corresponding to image data obtained through the camera 110 and a guideline 64 on the image, as shown in FIG. 6D.

The vehicle 100 may identify a third person 65 existing in a region of the guideline 64 and a second person 66 existing outside the region of the guideline 61.

Based on the identifying of the third person 65 existing in the region of the guideline 64, the vehicle 100 may control the output device 150 to output a notification for warning and/or control the braking device 176 to brake or decelerate the vehicle 100.

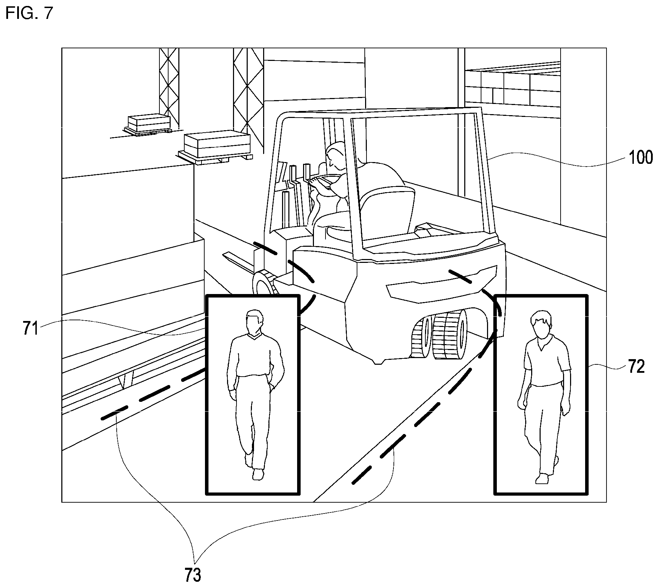

According to the above-described embodiment, the vehicle 100 may identify whether a person exists around the vehicle 100, and also, the vehicle 100 may identify whether a person is located on an expected driving path of the vehicle 100. Also, according to a person being located on the expected driving path of the vehicle 100, the vehicle 100 may output a notification and/or control a velocity or braking to prevent a collision with the person. Particularly, when a person exists on a movement path of the vehicle 100 while the vehicle 100 turns and moves backward, as shown in FIG. 7, a collision between the vehicle 100 and the person may be prevented.

FIG. 7 shows an example in which a person exists on a driving path of the vehicle 100 according to an embodiment while the vehicle 100 travels.

As shown in FIG. 7, in many cases, a driver who reverses the vehicle 100 fails to recognize a person behind the vehicle 100.

However, according to the above-described embodiments, the vehicle 100 may recognize persons 71 and 72 existing behind the vehicle 100 and identify that the person 71 is located on an expected driving path 73 of the vehicle 100. The vehicle 100 may prevent a collision accident with a person in advance by outputting a warning notifying that the person 71 exists on the expected driving path 73 of the vehicle 100 and/or performing deceleration or braking control.

The vehicle 100 and the control method thereof according to the above-described embodiments may provide a technology capable of detecting and warning a person located in an actual driving direction and region of a vehicle, thereby providing a driver assistance function more efficiently and productively compared to conventional technologies. Also, the vehicle 100 and the control method thereof may play a large role in reducing a driver's fatigue compared to conventional industrial vehicles that output warning notifications when there is a person around the vehicles regardless of movement paths of the vehicles. In addition, the vehicle 100 and the control method thereof may ensure safety of people around the vehicle 100 while allowing a driver to focus on moving the vehicle 100.

Meanwhile, the disclosed embodiments may be implemented in the form of a recording medium that stores instructions executable by a computer. The instructions may be stored in the form of program codes, and when executed by a processor, the instructions may perform operations of the disclosed embodiments by generating a program module. The recording medium may be implemented as a computer-readable recording medium.

The computer-readable recording medium may include all kinds of recording media storing instructions that can be interpreted by a computer. For example, the computer-readable recording medium may be Read Only Memory (ROM), Random Access Memory (RAM), a magnetic tape, a magnetic disc, flash memory, an optical data storage device, etc.

A machine-readable storage medium may be provided in the form of a non-transitory storage medium, wherein the term 'non-transitory' simply means that the storage medium is a tangible device, and does not include a signal (e.g., an electromagnetic wave), but this term does not differentiate between where data is semi-permanently stored in the storage medium and where the data is temporarily stored in the storage medium.

So far, the disclosed embodiments have been described with reference to the accompanying drawings. It will be understood by one of ordinary skill in the technical art to which the disclosure belongs that the disclosure can be embodied in different forms from the disclosed embodiments without changing the technical spirit and essential features of the disclosure. Thus, it should be understood that the disclosed embodiments described above are merely for illustrative purposes and not for limitation purposes in all aspects.

## Claims

1. A vehicle (100) comprising:
a plurality of cameras (110) provided on a main body of the vehicle (100) and having an outward viewing field;
a distance sensor (130) configured to detect a distance to an object;
a steering angle (120) sensor configured to obtain a steering angle of the vehicle (100); and
an output device (150) configured to output at least one of visual information or auditory information; and
a controller (180) electrically connected to the plurality of cameras (110), the distance sensor (130), the steering angle sensor (120), and the output device (150),
wherein the controller (180) is configured to
generate a guideline indicating an expected movement direction of the vehicle (100) based on the steering angle of the vehicle (100) obtained through the steering angle sensor (120),
identify a person existing on a path along which the vehicle (100) moves, based on image data obtained through the plurality of cameras (110) and the guideline, and
control the output device (150) to output a notification based on identifying the person existing on the path along which the vehicle (100) moves.

2. The vehicle (100) of claim 1, further comprising
a velocity sensor configured to detect a velocity of the vehicle (100),
wherein the controller (180) is configured to generate the guideline based on the velocity of the vehicle (100) detected through the speed sensor.

3. The vehicle (100) of claim 2, wherein
the controller (180) is configured to generate the guideline based on the velocity of the vehicle (100) and guideline length information for pre-designated vehicle velocity information.

4. The vehicle (100) of claim 3, wherein
the controller (180) is configured to generate the guideline with a longer length from the vehicle at a higher velocity of the vehicle(100).

5. The vehicle (100) of any one of claims from 1 to 4, wherein the controller (180) is configured to
identify the person around the vehicle (100) based on the image data,
identify whether the person is located in a region of the guideline in response to the identifying of the person, and
control the output device (150) to output the notification according to the person being located in the region of the guideline.

6. The vehicle (100) of claim 5, wherein the controller (180) is configured to, according to the person being located in the region of the guideline, control a braking device (179) of the vehicle (100) to control at least one of braking the vehicle (100) or decelerating the vehicle (100).

7. The vehicle (100) of claim 6, wherein the controller (180) is configured to, further based on identifying of straight driving or turning of the vehicle (100), control the output device (150) to output the notification and control the braking device (179) to control at least one of braking the vehicle (100) or decelerating the vehicle (100).

8. The vehicle (100) of claim 6 or 7, wherein the controller (180) is configured to
divide the region of the guideline into a pre-designated number of regions according to distances from the vehicle (100), and,
when the person is located in any region of the pre-designated number of regions divided from the region of the guideline, based on pre-designated reference control information for each of the regions divided according to the distances from the vehicle (100), control the output device (150) to output the notification and control the braking device (179) of the vehicle (100) to control at least one of braking the vehicle (100) or decelerating the vehicle (100).

9. The vehicle (100) of claim 8, wherein the pre-designated reference control information for each of the regions divided according to the distances from the vehicle (100) includes output interval information of the notification and control velocity information of the vehicle.

10. The vehicle (100) of any one of claims from 5 to 9, further comprising
memory storing an artificial intelligence (AI) model trained in advance to recognize an object,
wherein the controller (180) is configured to input the image data as input data of the Al model trained in advance and obtain information indicating that the person has been identified, as output data of the Al model trained in advance.

11. The vehicle (100) of any one of claims from 1 to 10, wherein
the output device (150) includes a display, and
the controller (180) is configured to control the display to display an image corresponding to the image data and the guideline.

12. A control method of a vehicle (100) comprising:
obtaining image data through a plurality of cameras (110) provided on a main body of the vehicle (100) and having a viewing angle facing outside of the vehicle (100),
generating a guideline indicating an expected movement direction of the vehicle (100) based on a steering angle of the vehicle (100) obtained through a steering angle sensor (120) of the vehicle (100),
identifying a person existing on a path along which the vehicle (100) moves, based on the image data and the guideline, and
controlling an output device (150) of the vehicle (100) to output a notification based on identifying the person existing on the path along which the vehicle (100) moves.

13. The control method of claim 12, wherein the generating of the guideline is further based on a velocity of the vehicle (100) detected through a velocity sensor configured to detect a velocity of the vehicle (100).

14. The control method of claim 13, wherein the generating of the guideline is based on the velocity of the vehicle (100) and guideline length information for pre-designated vehicle velocity information.

15. The control method of claim 14, wherein the guideline is generated with a longer length from the vehicle (100) at a higher velocity of the vehicle (100).

16. The control method of any one of claims from 12 to 15, further comprising
identifying the person around the vehicle (100) based on the image data, and
identifying whether the person is located in a region of the guideline in response to the identifying of the person,
wherein the controlling of the output device (150) to output the notification is based on the person being located in the region of the guideline.

17. The control method of claim 16, further comprising, according to the person being located in the region of the guideline, controlling a braking device (179) of the vehicle (100) to control at least one of braking the vehicle (100) or decelerating the vehicle (100).

18. The control method of claim 17, wherein the controlling of the output device (150) to output the notification and the controlling of the braking device (179) to control at least one of braking the vehicle or decelerating the vehicle are further based on identifying of straight driving or turning of the vehicle.

19. The control method of claim 16, 17 or 18, wherein the region of the guideline is divided into a pre-designated number of regions according to distances from the vehicle (100),
the control method further comprising,
when the person is located in any region of the pre-designated number of regions divided from the region of the guideline, based on pre-designated reference control information for each of the regions divided according to the distances from the vehicle (100), controlling the output device (150) to output the notification and controlling the braking device (179) of the vehicle (100) to control at least one of braking the vehicle (100) or decelerating the vehicle (100).

20. The control method of claim 19, wherein the pre-designated reference control information for each of the regions divided according to the distances from the vehicle (100) includes output interval information of the notification and control velocity information of the vehicle (100).
